# EUROPEAN PATENT APPLICATION

(11) **EP 0 940 330 A1**
(43) Date of publication of application: **08.09.1999**
(21) Application number: 99200667.6
(22) Date of filing: 08.03.1999
(51) Int. Cl.: B62H 3/12

(54) **Installation for parking or stowing a bicycle**

(30) Priority: 06.03.1998 NL 1008518
(71) Applicant: Sijpkens, Jules, 1411 GZ Naarden (NL); Sijpkens, Jeroen Alexander, 1411 GZ Naarden (NL)
(72) Inventor: Sijpkens, Jules, 1411 GZ Naarden (NL); Sijpkens, Jeroen Alexander, 1411 GZ Naarden (NL)
(74) Representative: de Bruijn, Leendert C.

(57) **Abstract**

An installation for parking or stowing a bicycle comprises a pivoting arm (9) which is mounted at one end such that it is rotatable about a horizontal axis (6) and at the other end has coupling means (12) for a bicycle, for example the front wheel thereof, which pivoting arm (9) can be pivoted between a coupling position for coupling to a bicycle and a high position, and a pretensioning element (5) which can be pretensioned on moving the arm from the high position into the low coupling position. The pivoting arm (9) can be brought from the coupling position into a rest position by pivoting said pivoting arm (9) in the opposite direction to the pivoting movement from the coupling position into the high position.

## Description

The invention relates to an installation for parking or stowing a bicycle, comprising a pivoting arm which is mounted at one end such that it is rotatable about a horizontal axis and at the other end has coupling means for a bicycle, for example the front wheel thereof, which pivoting arm can be pivoted between a coupling position for coupling to a bicycle and a high position, and a pretensioning element which can be pretensioned on moving the arm from the high position into the low coupling position.

An installation of this type is disclosed in EP-A 734 942. With the aid of such an installation a bicycle can be stowed efficiently, without taking up too much space.

If the installation is not in use, the pivoting arm is preferably in the coupling position. When the arm is in this position the installation can be used immediately, which is convenient for the cyclist.

In the coupling position, however, the arm necessarily protrudes a considerablc distance outwards, as a result of which it can constitute an inconvenient obstacle. In order to improve this situation it would be possible to move the arm manually, without a bicycle coupled thereto, into its high position. However, this has major disadvantages. The pretensioning element has been designed to take up a bicycle during this movement. Pivoting the arm upwards without this load could lead to too abrupt a movement, with the risk of the arm coming to a stop with a bump and becoming damaged. In this case it also constitutes a risk to the user, who could be hit by the uncontrolled flailing movement of the arm.

Subsequent downward movement of the arm without the weight of the bicycle is also not easy and has to be accompanied by the necessary exertion of force.

The aim of the invention is to provide an installation of the indicated type which better meets the requirements. This is achieved in that the pivoting arm can be brought from the coupling position into a rest position by pivoting said pivoting arm in the opposite direction to the pivoting movement from the coupling position into the high position.

In the rest position the arm can be brought to rest in a position which presents less or no nuisance. The pretensioning can be retained during this transition if the pretensioning element is connected to one end of a rod which at the other end is mounted such that it is rotatable about a horizontal axis, the pivoting arm being detachably coupled to said rod and/or said pretensioning element, such that in the coupled position the pivoting arm can be pivoted from the coupling position into the high position and back again, and in the uncoupled position the pivoting arm can be pivoted from the coupling position into the rest position.

The advantage of this construction is that the pivoting arm can be brought from the rest position into the coupling position in a simple manner. After all, the pivoting arm is not directly connected to the pretensioning element and the pretensioning forces therefore do not yet play a role during this operation.

Nevertheless, in the coupling position the pivoting arm is immediately available for moving a bicycle upwards. In the coupling position the pivoting arm is again subjected to the influence of the pretensioning force, as a result of which the bicycle can be moved upwards with, for most people, virtually little effort.

Preferably, a frame is provided, the pretensioning element being rotatably mounted at one end thereof and the rod and the pivoting arm being rotatably mounted at the other end thereof. The frame makes it possible to manoeuvre the installation as a whole and fix it to a wall.

The coupling between pivoting arm and rod can be produced in other ways. According to one of these possibilities, a bracket can have been provided on the rod or the pivoting arm, which bracket can be detachably connected to a coupling element, such as a hook, on the pivoting arm if the bracket is on the rod or on the rod if the bracket is on the pivoting arm.

The frame and the rod can have a securing element for securing the pretensioning element in the coupling position and/or the rest position. With this arrangement the securing element can be secured in the rest position or released from the rest position by means of a compressive force exerted on the rod and/or the pretensioning element, which compressive force is directed towards the frame.

Securing can be activated or deactivated by, for example, exerting the said compressive force by the front wheel of the bicycle.

The invention will be described in more detail below with reference to an illustrative embodiment shown in the figures.

Figure 1 shows a perspective view of the installation, with the pivoting arm in the rest position.

Figure 2 shows a perspective view with the pivoting arm in the coupling position.

Figure 3 shows a perspective view with the pivoting arm in the high position.

Figure 4 shows a side view of Figure 1.

Figures 5 - 7 show a variant of the installation.

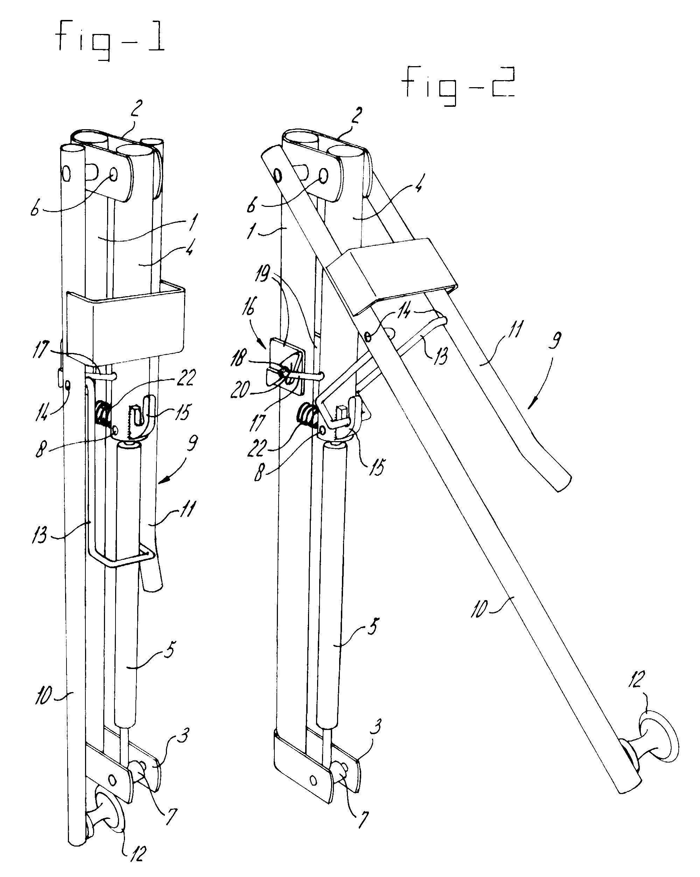

The installation for parking or stowing a bicycle shown in Figure 1 comprises a tubular frame 1 which, for example, can be fixed to the wall of a garage or cycle rack. The rod 4 is mounted by means of the top bracket 2 such that it is rotatable about shaft 6. The gas spring 5 is mounted by means of the bottom bracket 3 such that it is rotatable about shaft 7. The rod 4 and gas spring 5 are rotatably connected at the ends thereof which face one another, by means of shaft 8. The shafts 6, 7, 8 run parallel to one another, transversely with respect to the tubular frame 1.

In connection with compensation for the influence of temperature fluctuations on the action of the gas spring 4, the position of the shaft can be made adjustable (not shown), for example adjustable in the longitudinal direction of the rod 4 or of the housing of the gas spring 5.

Moreover, the tubular frame 1 can itself have been mounted on the wall concerned such that it is rotatable about its vertical axis (not shown).

Furthermore, the pivoting arm, indicated in its entirety by 9, is mounted around shaft 6. Said pivoting arm 9 consists of a relatively long pivoting arm section 10 and a relatively short pivoting arm section 11. A suspension bracket 12 is provided at the end of the relatively long pivoting arm section 10, onto which bracket the front wheel of a bicycle can be coupled. The relatively short pivoting arm section 11 has dimensions such that the bicycle wheel can easily be placed on the bracket 12 from the side, in the coupling position shown in Figure 2.

The pivoting arm 9 is connected by means of bracket 13 to the rod 4. To this end, the bracket 13 is rotatably mounted by studs 14 in the pivoting arm sections 10, 11.

Close to the shaft 8, rod 4 also has a hook 15, in which the bracket 13 can be accommodated in the manner shown in Figures 2 and 3.

The installation has securing means, indicated in their entirety by 16, which consist of two pins 17 joined to either side of the rod 4 and having ends 18 facing one another, and two shaped plates 19 fixed to either side of the tubular frame 1.

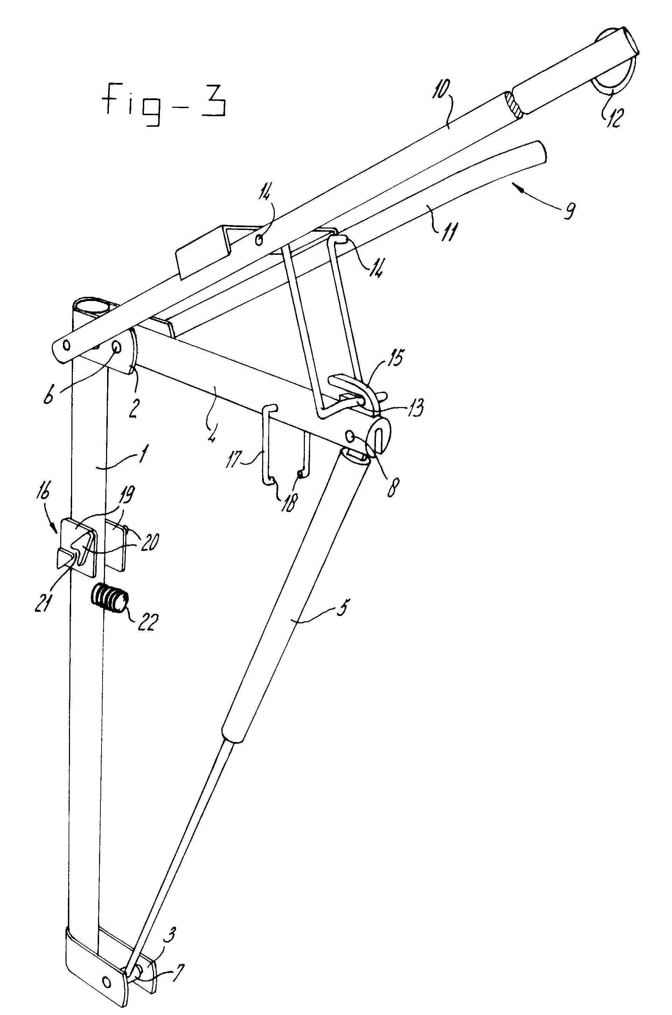

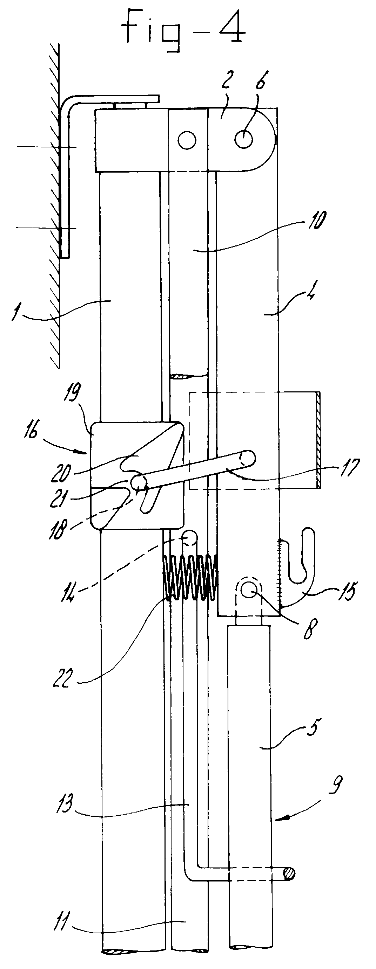

In the position shown in Figures 1 and 4, those ends 18 of the pins 17 which face one another hook behind the moulded raised portions 20 of the shaped plates 19. They are held in the shaped cavity 21, as defined by said moulded raised portions 20, by means of a compression spring 22 fixed to the tubular frame 1, which compression spring attempts to push the rod 4 away from the tubular frame 1. If the gas spring 5 and the rod 4 are locked in a position at an angle of 5° and 10°, the compression spring 22 can be omitted.

To bring the pivoting arm 9 from the rest position shown in Figures 1 and 4, in which said pivoting arm 9 takes up little space, into the coupling position shown in Figure 2 the pivoting arm 9 is lifted such that the bracket 13 comes to rest in the hook 15.

A bicycle can then be hooked onto the bracket 12, after which the pins 17, and in particular their ends 18, can be pushed out of the shaped cavity 21 in the moulded parts by exerting a slight pressure on the pivoting arm 9.

Under the influence of a pretensioning spring, which is not shown, the ends 18 come to lie above the moulded raised sections 20, after which the pivoting arm 9, together with the bicycle thereon, swings upwards under the influence of the spring 22 and the pretensioning in the gas spring 5.

Ultimately with this arrangement the position shown in Figure 3 is reached.

On moving the bicycle downwards from the position shown in Figure 3 into the position shown in Figure 2, the gas spring 5 is again pretensioned. The pins 17 come to bear with their ends 18 against the underside of the moulded raised portions 20 and, under the influence of the spring which is not shown, into the shaped cavity 21.

The installation is thus locked and the bicycle can be removed.

Finally, the bracket 13 can be lifted out of the hook 15 and the pivoting arm 9 moved into its rest position shown in Figures 1 and 4.

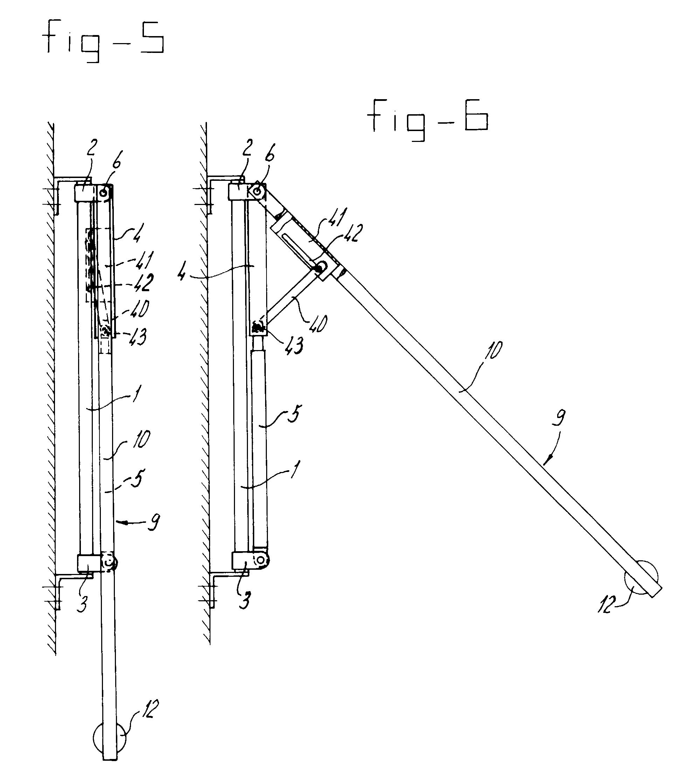

The same tubular frame 1, pivoting arm 9, rod 4 and gas spring 5 are used in the variant shown in Figures 5 - 7, which variant is shown diagrammatically only. The rod 4 and the pivoting arm 9 now have a common shaft 6.

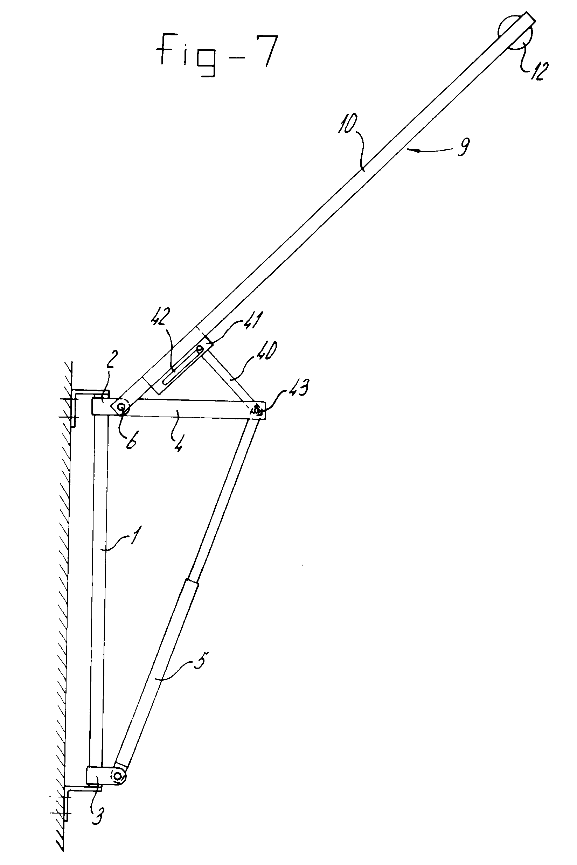

The pivoting arm 9 is swung from the rest position, shown in Figure 5, into the coupling position, indicated in Figure 6. In the coupling position the pivoting arm 9 is locked at a fixed angle with respect to the rod 4 by means of the arm 40. Said arm 40 is, on the one hand, connected to rod 4 by means of shaft 43 and, on the other hand, slidably accommodated in the slotted hole 42 of coupling piece 41 attached to pivoting arm 9.

In the position shown in Figure 6, the arm 40 is locked, by means which are not shown, in the slotted hole 42, such that a fixed angle is retained between the rod 4 and pivoting arm 9 on swinging into the high position in Figure 7.

## Claims

1. Installation for parking or stowing a bicycle, comprising a pivoting arm (9) which is mounted at one end such that it is rotatable about a horizontal axis (6) and at the other end has coupling means (12) for a bicycle, for example the front wheel thereof, which pivoting arm (9) can be pivoted between a coupling position for coupling to a bicycle and a high position, and a pretensioning element (5) which can be pretensioned on moving the arm from the high position into the low coupling position, characterised in that the pivoting arm (9) can be brought from the coupling position into a rest position by pivoting said pivoting arm (9) in the opposite direction to the pivoting movement from the coupling position into the high position.

2. Installation according to Claim 1, wherein the pretensioning element (5) is connected to one end of a rod (4) which at the other end is mounted such that it is rotatable about a horizontal axis (6), the pivoting arm being detachably coupled to said rod (4) and/or said pretensioning element, such that in the coupled position the pivoting arm (9) together with the rod (4) can be pivoted from the coupling position into the high position and back again, and in the uncoupled position the pivoting arm (9) can be pivoted from the coupling position into the rest position.

3. Installation according to Claim 2, wherein a frame (1) is provided, the pretensioning element (5) being rotatably mounted at one end (3) thereof and the rod (4) and the pivoting arm (9) being rotatably mounted at the other end (2) thereof.

4. Installation according to Claim 3, wherein the rod (4) and the pivoting arm (9) have coincident axes of rotation (6).

5. Installation according to Claim 3 or 4, wherein a bracket (13) is provided on the rod (4) or the pivoting arm (9), which bracket (13) can be detachably conncctcd to a coupling component (15) on the pivoting arm (9) if the bracket is on the rod (4) or on the rod (4) if the bracket is on the pivoting arm (9).

6. Installation according to Claim 3, 4 or 5, wherein the frame (1) and the rod (4) have a securing element (19-21, 16-18) for securing the pretensioning element (5) in the coupling position and/or the rest position.

7. Installation according to Claim 6, wherein the securing element can be secured in the rest position or can be released from the rest position by means of a compressive force exerted on the rod (4) and/or the pretensioning element (5), which compressive force is directed towards the frame (1).

8. Installation according to Claim 2, 3, 4, 5, 6 or 7, wherein in the pretensioned state the rod (4) and the pretensioning element (5) are essentially located in the extension of one another.

9. Installation according to Claim 2, 3, 4, 5, 6 or 7, wherein in the extreme pretensioned position the rod (4) and the pretensioning element (5) make an angle other than zero degrees.

10. Installation according to one of the preceding claims, wherein the pretensioning element is a gas spring (5).

11. Installation according to Claim 10, wherein compensating means arc provided for compensating for the influence of temperature fluctuations on the action of the gas spring.

12. Installation according to Claim 11, wherein the compensating means comprise an adjustable link between gas spring (5) and rod (4).

13. Installation according to Claim 12, wherein the adjustable link comprises an adjustment in the longitudinal direction of the gas spring (5) and/or rod (4).
